Europäisches Patentamt

European Patent Office

Office européen des brevets

(19)

(11) Veröffentlichungsnummer: **0 315 628**
**B1**

(12) **EUROPÄISCHE PATENTSCHRIFT**

(45) Veröffentlichungstag der Patentschrift: 29.08.90

(21) Anmeldenummer: 87903267.0

(22) Anmeldetag: 05.06.87

(86) Internationale Anmeldenummer:
PCT/DE87/00258

(87) Internationale Veröffentlichungsnummer:
WO 88/00690 28.01.88 Gazette 88/03

(51) Int. Cl.⁵: **G 01 L 3/10,** G 01 L 1/12

(54) VORRICHTUNG ZUM BERÜHRUNGSFREIEN MESSEN EINER MECHANISCHEN SPANNUNG.

(30) Priorität: 23.07.86 DE 3624846

(43) Veröffentlichungstag der Anmeldung:
17.05.89 Patentblatt 89/20

(45) Bekanntmachung des Hinweises auf die
Patenterteilung:
29.08.90 Patentblatt 90/35

(84) Benannte Vertragsstaaten:
DE FR GB IT SE

(56) Entgegenhaltungen:
DE-A-1 900 194     US-A-2 365 073
DE-A-3 437 379     US-A-2 557 393
Patent Abstract of Japan, band 10, Heft 19
(P-423)(2076), 24 Januar 1986 (Tokyo JP) siehe
das ganze Dokument & JP A 60/173433
Patent Abstract of Japan, band 11, Heft 177
(P-583)(2624), 6 Juni 1987 (Tokyo JP) siehe das
ganze Dokument & JP A 62/6129
Patent Abstract of Japan, band 10, Heft 154
(P-463)(2210), 4 Juni 1986 (Tokyo JP) siehe das
ganze Dokument & JP A 61/8639

(73) Patentinhaber: ROBERT BOSCH GMBH
Postfach 50
D-7000 Stuttgart 1 (DE)

(72) Erfinder: DOBLER, Klaus
Bettäckerstr. 12
D-7016 Gerlingen (DE)
Erfinder: HACHTEL, Hansjörg
Buchenstr. 4
D-7251 Weissach (DE)
Erfinder: ZIMMERMANN, Georg
Gartenstr. 58
D-7016 Gerlingen (DE)

## Beschreibung

Die Erfindung geht aus von einer Vorrichtung zum Messen der Torsion oder Biegekraft nach der Gattung des Hauptanspruchs. Aus der DE—A—3437379 ist es bekannt, daß ferromagnetische Materialien ihre Permeabilität in der Richtung, in der Zug- oder Druckkräfte einwirken, ändern. Diese Permeabilitätsänderung wird berührungslos von einer Sensorspule erfaßt. Werden als Materialien amorphe Metalle verwendet, so können diese nur in Form von Folien aufgeklebt oder aufgeschweißt werden. Dabei ist es schwierig, eine hohe Haftfestigkeit oder Kriechfestigkeit des Materials auf dem Meßobjekt zu erzielen. Ferner kann beim Anschweißen der amorphen Metalle leicht die Kristallisationsschwelle überschritten werden, so daß sich sein Gefügezustand in Teilbereichen verändert und kein genau definierbarer Materialzustand mehr vorliegt. Ferner ist keine über den gesamten Meßbereich linear verlaufende Meßkurve erreichbar, auch wenn dazu die Beschichtung auf der Welle unter relativ komplizierter Art und Weise mit Vorspannung aufgebracht wird. Besonders in den Randbereichen weicht die Meßkurve stark von einer Geraden ab, so daß nur ein sehr kleiner Meßbereich ausgewertet werden kann. Außerdem ist der dazu notwendige Fertigungsprozeß aufwendig und schwierig durchzuführen. Es muß eine erste Schicht auf einem links verdrillten und die andere Schicht auf einem rechts verdrillten Wellenabschnitt aufgebracht werden oder umgekehrt. Dabei arbeiten die vorgespannten Oberflächenabschnitte nur in einem schmalen Meßbereich linear, so daß nur ein relativ kleiner Teil des zur Verfügung stehenden Meßbereichs ausgenützt werden kann.

In der US—A—2 577 393 wird ein System zur Torsionsbestimmung einer Welle beschrieben, das mit zwei nach dem sogenannten Transformatorprinzip wirkenden Spulen arbeitet. Dadurch baut die Vorrichtung relativ groß. Die Aufnahmeelemente sind parallel zu den unter 45° zur Achse der Welle verlaufenden Hauptspannungslinien angeordnet. Falls das Material der Welle selbst nicht genügend spannungsaktiv ist, ist eine entsprechende Schicht aufgebracht. Ein unter ±45° angeordnetes Rillenmuster ist nicht vorgesehen. Der Verlauf der Meßsignale ist nicht genügend linear zur zu bestimmenden Torsion, und die Meßwerte weisen keine genügende Empfindlichkeit auf.

Bei dem in der JP—A—60-173 433 beschriebenen Torsionsmesser sind zwei Spulen in einer Differenzschaltung so miteinander verschaltet, daß der Temperatureinfluß auf die Meßwerte kompensiert wird. Die aufgebrachten magnetischen Schichten weisen kein Rillenmuster auf.

In der JP—A—60-008 639 wird ein Torsionsmesser beschrieben, der auf den vier Ästen des magnetischen Kerns je eine Spule aufweist. Jeweils gegenüberliegende Spulen sind in einem elektrischen Schaltkreis verschaltet. Einer der Schaltkreise dient dabei als Erregerkreis, während der andere als Resonanzkreis zur Meßwertbestimmung ausgelegt ist. Der Torsionsmesser arbeitet somit nach dem Transformatorprinzip und baut relativ groß. Ferner weist er kein Rillenmuster auf.

Vorteile der Erfindung

Die erfindungsgemäße Vorrichtung hat demgegenüber den Vorteil, daß die Schicht mit hoher Haftfestigkeit und Kriechfestigkeit in einfacher und preisgünstiger Weise auf das Meßobjekt aufbringbar ist. Es ist keine Vorspannung notwendig. Mit Hilfe der Auswerteschaltung ist eine über den gesamten Meßbereich linear verlaufende Kennlinie auswertbar. Mit Hilfe der die Schichten auf einer Seite des Meßobjekts bis auf die Randbereiche überdeckenden Spulen ist ein relativ einfacher Einbau der Sensoren auch bei komplizierter und schlecht zugänglicher Bauweise möglich. Da die Spulen gleichzeitig relativ viele formanisotrope Zonen erfassen, wird bereits durch die Spulen selbst ein sogenannter Mittelwert gebildet. Die Wicklungsform ist leicht und in wirtschaftlicher Form dem jeweiligen Meßproblem anpaßbar. Auch kann die wirtschaftliche Schichttechnik (Dünnschicht-Dickschichttechnik) zum Aufbringen der Spule verwendet werden.

Durch die in den abhängigen Patentansprüchen aufgeführten Maßnahmen ist eine vorteilhafte Weiterbildung und Verbesserung der in der unabhängigen Ansprüchen angegebenen Merkmale möglich.

Zeichnung

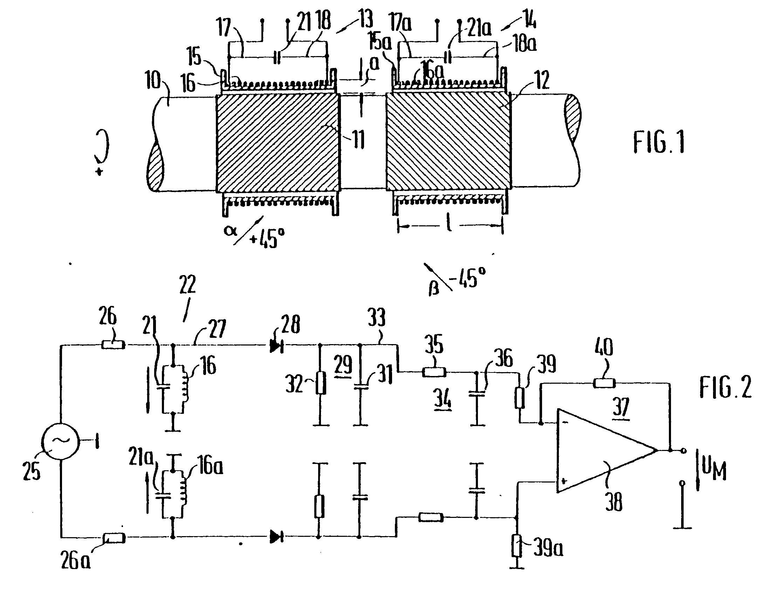

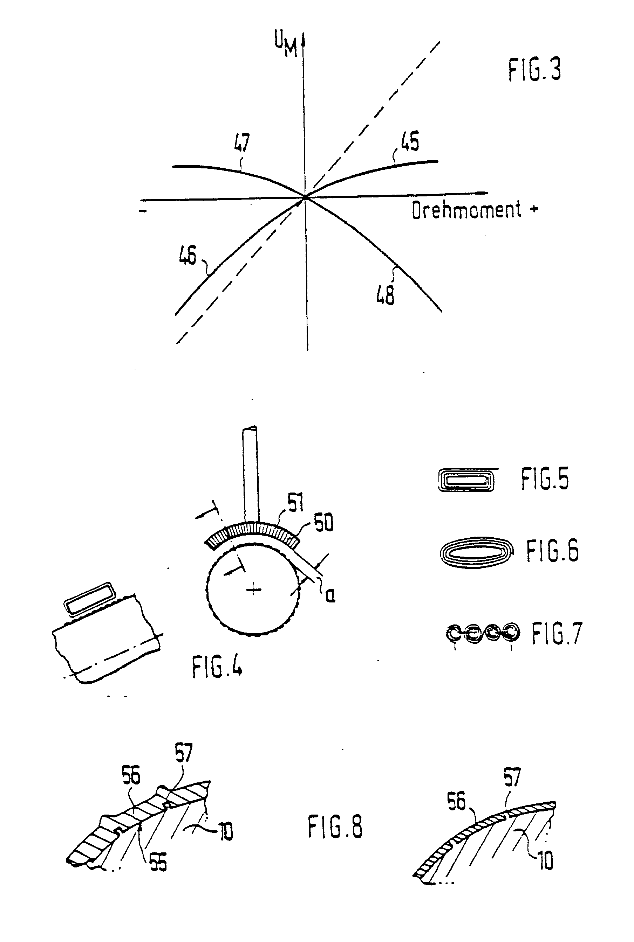

Eine Ausführungsbeispiel der Erfindung ist in der Zeichnung dargestellt und in der nachfolgenden Beschreibung näher erläutert. Es zeigen Figur 1 einen magnetoelastischen Drehmomentsensor, Figur 2 eine erfindungsgemäße Schaltungsanordnung zum Betreiben der magnetoelastischen Sensoren gemäß Figur 1, Figur 3 ein Diagramm, das die Meßspannung über dem anliegenden Drehmoment zeigt, die Figuren 4 bis 7 je eine Abwandlung einer Einzelheit und Figur 8 Teilschritte eines Herstellungsverfahrens.

Beschreibung des Ausführungsbeispiels

In Figur 1 ist mit 10 eine Welle bezeichnet, deren Verdrehung durch Torsion bestimmt werden soll. Auf der Welle 10 sind zwei Bereiche 11, 12 aus hochmagnetoelastischem Material aufgebracht, dessen Permeabilität sich als eine Funktion der auf die Welle 10 ausgeübten Belastung ändert. Bei der Verdrillung der Welle 10 entstehen, falls im elastischen Bereich gearbeitet wird, zwei sich unter 90° kreuzende Hauptspannungsrichtungen. Dabei wirkt längs der eingezeichneten Linie α die Zugspannung und längs der Linie β die Druckspannung mit jeweils gleichem Betrag. Dabei erhöht sich bei ferromagnetischen Materialien, z.B. längs der Linie α die Permeabilität, während sie sich längs der Linie β erniedrigt oder umgekehrt. Ist in den Bereichen in einem Winkel unter +45° bzw. −45° zur Symmetrieachse, d.h. zur Wellenachse, ein Streifenmuster ausgebildet, so ergibt sich ein richtungsabhängiges Signal.

Um die Nullpunktsdrift zu vermindern, werden beide Spulen in einer Wheatstone'schen Halbbrücke zusammengeschaltet. Sie erfassen dabei jeweils um 90° gegeneinander versetzte Zonen.

Zur Erfassung der Permeabilitätsänderung ist jedem Bereich 11, 12 eine Sensoranordnung 13, 14 zugeordnet. Die Sensoranordnungen 13, 14 sind gleich ausgebildet und bestehen aus einem Spulenträger 15, auf den eine Spule 16 aufgewikkelt ist. Die Spule 16 ist möglichst mit geringem Abstand "a" zur Welle 10 anzuordnen. Die Anschlüsse 17, 18 der Spule 16 sind mit einem Kondensator 21 verbunden, der mit der Spule 16 einen Parallelschwingkreis bildet. Die Parallelschwingkreise der beiden Sensoranordnungen 13, 14 sind in eine elektrische Auswerteschaltung 22, die in Figur 2 näher dargestellt ist, geschaltet.

Die Auswerteschaltung 22 ist als Differenzschaltung für die beiden Sensoranordnungen 13, 14 dargestellt. Da beide Äste der Auswerteschaltung 22 aus gleichen Bauteilen bestehen, sind die Bauteile für die zweite Spule und deren Schaltungsast mit a ergänzt. Ein Wechselspannungsgenerator 25 speist die Spulen 16, 16a mit einer Wechselspannung. Eine Parallelschaltung, wie oben beschrieben, bestehend aus der Sensorspule 16 und dem Kondensator 21, ist über einen Vorwiderstand 26 an den Wechselspannungsgenerator 25 geschaltet. An der Sensorspule 16 ist ein Sensorsignal 27 abnehmbar. Das Sensorsignal 27 wird über eine Diode 28, eine Siebschaltung 29, bestehend aus einem Siebkondensator 31 und einem Ableitwiderstand 32, zugeführt. Die gesiebte Signalspannung 33 gelangt über eine Tiefpaßanordnung 34, die aus einem Widerstand 35 und einem Kondensator 36 gebildet wird, an eine Verstärkeranordnung 37. Die Verstärkeranordnung 37 ist als invertierende Operationsverstärker-Schaltung 38 ausgebildet, deren Verstärkungsfaktor mit den beiden Widerständen 39, 40 einstellbar ist. Dabei wird an den negativen Eingang des Operationsverstärkers 38 das Sensorsignal der Spule 16 und an den positiven Eingang des Operationsverstärkers 38 das Sensorsignal der zweiten Spule 16a zugeführt.

Das von der stromdurchflossenen Wicklung 16 der Sensoranordnung 13 bzw. 14 erzeugte magnetische Wechselfeld erfaßt die Welle 10, so daß die elektrischen Eigenschaften der Spule 16 von den Bereichen 1 bzw. 12 der Welle 10 beeinflußt werden. Zunächst bestimmt die Permeabilität der Bereiche 11, 12 der Welle 10 die Induktivität der Spulen 16. Da wie bereits oben erwähnt die Permeabilität ferromagnetischer Stoffe unter Zug- oder Druckbelastung, in die sich eine Torsionsspannung bekanntlich aufspalten lassen, ändert, kann berührungsfrei der mechanische Spannungszustand der Welle 10 gemessen werden. Die Induktivität der Spule 16 ist ferner eine Funktion des Abstandes der Spule 16 von der Oberfläche der Welle 10 in den Bereichen 11, 12. Der Abstand "a" sollte vorzugsweise deshalb zur Erzielung eines hohen Nutzsignales möglichst klein sein.

Die magnetischen Eigenschaften der Spule 16 werden aber zusätzlich von einem zweiten Effekt bestimmt. Das magnetische Wechselfeld induziert in die Oberfläche der Welle 10 in den Bereichen 11, 12 Wirbelströme, die ein Absinken der Induktivität bewirken. Auch der Einfluß der Wirbelströme ist eine Funktion des Abstands a der Spule 16 von der Oberfläche der Bereiche 11, 12. Beide Effekte verstärken sich bei kleiner werdendem Abstand a. Infolge der im Bereich 11 aufgebrachten Streifenstruktur ergibt sich bei einem auf die Welle 10 einwirkenden rechts drehenden Moment eine Änderung des auf die Spule 16 wirkenden magnetoelastischen Effektes. Dabei wird der auf Zugbelastung beruhende Anteil vergrößert und der auf Druckbelastung beruhende Anteil verkleinert. Die Streifenstruktur besteht aus durch dünne Rillen oder Stege voneinander getrennten Zonen. Unter Beachtung der Polarität des Operationsverstärkers 38 ergibt sich im Diagramm nach Figur 3, das die Meßspannung $U_M$ über dem Drehmoment zeigt, dadurch die im ersten Quadranten dargestellte Kurve 45. Es ist bei größer werdender Verdrillung eine tendenzielle Empfindlichkeitabnahme erkennbar. Sinngemäß stellt die Kurve im III-Quadranten den Zusammenhang bei einem Linksdrehmoment dar. Es ergibt sich eine vor allem bei kleinen Momenten ausgeprägte Empfindlichkeitszunahme mit größer werdender Torsionsspannung. Die in den II- und IV-Quadranten eingezeichneten Kurven 47 und 48 zeigen die gleichzeitig in der Spule 16a der zweiten Sensoranordnung 14 auftretende Spannung, die spiegelbildlich zur y-Achse ausgebildet ist. Die beiden Kurven 45, 46 bzw. 47, 48, obwohl ungleichmäßg gekrümmt, verlaufen gegensinnig. Sie ergeben aber, bedingt durch ihr jeweiliges Steigungsverhalten, in einer entsprechenden Auswerteschaltung 22, wie in Figur 2 dargestellt, subtrahiert eine nahezu lineare Meßkurve. Die Ursache dieser Kurvenverläufe ist der bei Zug- bzw. Druckbelastung unterschiedliche Verlauf der magnetoelastischen Empfindlichkeitskennlinie des Permalloymaterials der Bereiche 11, 12.

In manchen Fällen, z.B. bei kleinen Bauraum oder schlechter Zugänglichkeit, ist es oft nicht möglich, ringförmige Spulen 16 um die Welle 10 anzuordnen. Hierzu werden, wie in Figur 4 dargestellt, die Spulen 50 nur auf einer Seite der Welle 10 angeordnet, so daß sie nur einen Teilbereich der Bereiche 11, 12 überdecken. Dabei soll der Abstand a der Spule 50 von der Oberfläche der Bereiche 11, 12 vorzugsweise konstant sein. Der Spulenträger 51 muß also einen Radius aufweisen, dessen Mittelpunkt auf der Achse der Welle 10 liegt. Die Spule 50 ist dazu in Längsrichtung der Achse der Welle 10 um den Spulenkörper 51 gewickelt. Dadurch überdeckt eine Wicklung der Spule 50 über seine gesamte Länge mehrere, in den Bereichen 11, 12 eingebrachte Streifenstrukturen, so daß aufgrund der gleichzeitigen, summarischen, nahezu gleichwertigen Erfassung vieler Zonen ein Mittelwert gebildet wird. Fehler, die z.B. durch die übergänge an den einzelnen Streifen begründet sind, werden durch die gleichzeitige Erfassung mehrerer Zonen durch das magnetische Wechselfeld der Spulen 50 vermindert. Weitere Fehler, insbesondere die Temperaturdrift, werden durch die Differenzschaltung der beiden Spulen in der Auswerteschaltung 22 infolge der Kompensationswirkung vermindert. Die Spule 50 kann auch in Achsquerrichtung gewickelt werden, also um 90° versetzt zur in Figur 4 dargestellten Wickelrichtung. Es ist aber auch möglich, die Spule 50 auf dem segmentartigen Spulenkörper 51 rechteckig oder oval auszugestalten, wie in den Figuren 5 und 6 dargestellt ist. Es ist auch denkbar, mehrere z.B. kreisförmige Spulen 53 in Reihenschaltung auf der Innenseite des Spulenkörpers 51 anzuordnen.

Die Herstellung drahtgewickelter Spulen 50, deren Form sich wegen eines konstanten Abstandes der Wellenoberflächen anpassen muß, ist relativ aufwendig. Die Spulen können aber auch auf elektrochemische Weise, z.B. geätzt oder aufgalvanisiert, oder in Druck- oder in Aufdampfverfahren aufgebracht werden.

Zum Aufbringen der magnetoelastischen Schicht auf der Welle 10 ist es besonders vorteilhaft, die Oberfläche der Welle 10 aufzurauhen oder chemisch vorzubereiten. Anschließend wird durch Galvanisieren oder Plasmaspritzen eine aus beispielsweise 45/55% zusammengesetzte Fe/Ni-Schicht (Permalloy) aufgebracht. Um die Haftfestigkeit der Schicht auf der Welle zusätzlich zu erhöhen, kann nocht eine ca. 2 µm starke Bindeschicht aufgebracht werden. Die unter 45° ausgerichteten Zonen werden anschließend mit Hilfe eines Werkzeuges, z.B. eines spitzen Drehmeißels über den gesamten Umfang eingeteilt. Bei einer axialen Beschichtungslänge von z.B. $1 \approx 12$ mm sollte die Zonenbreite $c \approx 1$ mm und die Breite der eingeritzten Nut $d \approx 0,1$ mm betragen.

Ebenfalls besonders vorteilhaft erweist es sich, wenn auf der Welle 10, wie in Figur 8 dargestellt, ein reliefartiges Streifenmuster 55 durch spanabhebende oder spanlose Verfahren hergestellt wird. Anschließend wird die Oberfläche vollständig mit einer magnetischen Schicht 56 durch Galvanisieren, Plasmaspritzen oder anderer Verfahren beschichtet. Um wieder die gewünschten, voneinander getrennten Zonen zu erhalten, wird anschließend mit spanabhebenden oder spanlosen Verfahren das Relief abgetragen, bis die vorstehenden Stellen 57 der Wellen herausragen und als Trennung zwischen den in den Vertiefungen liegenden magnetischen Schicht dienen.

Die vorgeschlagene Vorrichtung kann insbesondere dort eingesetzt werden, wo das Drehmoment unter äußerst eingeengten Platzverhältnissen gemessen werden muß. Aufgrund des außergewöhnlich einfachen und konstengünstigen Aufbaus der Vorrichtung eignet sie sich auch besonders für Großserienanwendungen, wie beispielsweise im Kraftfahrzug als Sensor für die elektrische Lenkhilfe.

**Patentansprüche**

1. Vorrichtung zum berührungsfreien Messen der mechanischen Spannungen, die auf ein sich drehendes oder stationäres Meßobjekt (10) ausgeübt werden, wobei sich auf der Wand des Meßobjekts (10) wenigstens zwei Bereiche (11, 12) mit einer magnetoelastisch empfindlichen Oberfläche, deren Permeabilität sich als eine Funktion der Beanspruchung ändert, befinden und jedem dieser Bereiche (11, 12) wenigstens eine Sensoranordnung (13, 14) zugeordnet ist, die jeweils eine nach der Selbstinduktion arbeitende Spule (16 bzw. 16a) sowie einen Oszillator (25) zur Ansteuerung der Spulen (16 bzw. 16a) und zur Induzierung der Wechselfelder aufweist und eine elektrische Auswerteschaltung (22) zum Messen der Impedanzänderung der Spulen (16 bzw. 16a), dadurch gekennzeichnet, daß die Bereiche (11, 12) eine vorspannungsfrei aufgetragene Oberfläche und ein unter +45° und/oder −45° zur Wellenachse ausgerichtetes Rillenmuster aufweisen, daß die Spulen (16 bzw. 16a) zusammen mit wenigstens jeweils einem Kondensator (21 bzw. 21a) je einen Parallelschwingkreis bilden, die Teile der elektrischen Auswerteschaltung (22) sind, so daß eine nahezu lineare Kennlinie für die mechanische Beanspruchung entsteht.

2. Vorrichtung nach Anspruch 1, dadurch gekennzeichnet, daß die Widerstandswerte der den Sensorspulen (16 und 16a) zugeordneten Vorwiderstände (26 bzw. 26a), die Induktivitäten und ohmsche Widerstandswerte der Sensorspulen (16 und 16a), die Kapazität der Kondensatoren (21 bzw. 21a) sowie die Frequenz der Wechselspannungsquelle (25) derart zusammen mit dem Rillenmuster der Bereiche (11, 12) aufeinander abgestimmt sind, daß sich eine lineare Kennlinie ergibt.

3. Vorrichtung nach Anspruch 1 und/oder 2, dadurch gekennzeichnet, daß die Sensorspulen (16 und 16a) mindestens teilweise die Bereiche (11, 12) überdecken und daß die Sensorspulen über die gesamte Spulenlänge und die Spulenbreite einen konstanten Abstand (a) zur Oberfläche der Bereiche (11, 12) haben.

4. Vorrichtung nach einem der Ansprüche 1 bis 3, dadurch gekennzeichnet, daß die Spule (50) in Richtung der Wellenachse gewickelt ist.

5. Vorrichtung nach Anspruch 4, dadurch gekennzeichnet, daß die Geometrie der Spule (16) kreisförmig, oval oder rechteckig ist.

6. Vorrichtung nach Anspruch 5, dadurch gekennzeichnet, daß für eine Sensoranordnung (13, 14) mehrere Spulen in Reihe geschaltet sind.

7. Vorrichtung nach einem der Ansprüche 1 bis 6, dadurch gekennzeichnet, daß die magnetoelastische Schicht aus einer Fe-NI-Legierung mit einem Mischungsverhältnis 45/55 besteht.

8. Verfahren zur Herstellung der Vorrichtung nach einem der Patentansprüche 1 bis 7, insbesondere zum Aufbringen der Beschichtung, dadurch gekennzeichnet, daß in die Wand des Meßobjekts (10) eine der gewünschten Art entsprechende Reliefstruktur eingebracht wird, daß auf der Welle (10) eine vorspannungsfreie Schicht aus magnetoelastischem Material aufgebracht wird, die die Reliefstruktur völlig überdeckt, und daß die Schicht bis zur maximalen Höhe des Reliefs abgetragen wird.

9. Verfahren nach Anspruch 8, dadurch gekennzeichnet, daß die Schicht spanlos oder spanabhebend abgetragen wird.

10. Verfahren zur Herstellung der Vorrichtung nach einem der Patentansprüche 1 bis 7, insbesondere zum Aufbringen der Beschichtung, dadurch gekennzeichnet, daß die Wand des Meßobjekts (10) aufgerauht wird, daß eine vorspannungsfreie Schicht aus magnetoelastischem Material aufgetragen wird und daß anschließend mit Hilfe eines spitzen Werkzeugs eine gewünschte Rillenform mit möglichst geringen Abständen eingebracht wird.

11. Verfahren nach Anspruch 10, dadurch gekennzeichnet, daß nach dem Aufrauhen der Wand des Meßobjekts (10) auf dieser eine dünne Bindeschicht aufgebracht wird.

**Revendications**

1. Dispositif pour la mesure sans contact de tensions mécaniques, qui sont exercées sur un objet à mesurer (10) tournant ou immobile, sur la paroi duquel existent au moins deux zones (11, 12) de surface magnétoélastique sensible dont la perméabilité se modifie en fonction de la contrainte et un dispositif de détection (13, 14) au moins étant attribué à chacune de ces zones (11, 12), dispositif qui comprend respectivement une bobine (16 ou 16a) travaillant en self-induction ainsi qu'un oscillateur (25) pour l'excitation des bobines (16 ou 16a) et pour l'induction des champs alternatifs et un circuit électrique d'exploitation (22) pour mesurer la variation d'impédance des bobines (16 ou 16a), caractérisé

—en ce que les zones (11 et 12) comprennent une surface rapportée dans tension et un modèle de rainures disposé à +45° et/ou −45° par rapport à l'axe de l'arbre,

—en ce que les bobines (16 ou 16a) chacune d'elle avec au moins un condensateur (21 ou 21a) constituent chacune un circuit oscillant parallèle, qui sont des parties du circuit électrique d'exploitation (22), de sorte qu'il se crée une courbe à peu près linéaire pour la sollicitation mécanique.

2. Dispositif selon la revendication 1, caractérisé en ce que les valeurs de résistance des résistances placées en amont (26 ou 26a) et attribuées aux bobines (16 et 16a) détectrices, les inductances et valeurs en ohms des résistances des bobines (16 et 16a), la capacité des condensateurs (21 ou 21a) ainsi que la fréquence de la source de tension alternative (25) sont accordées les unes avec les autres et ensemble avec le modèle de rainure des zones (11, 12) de façon que la courbe caractéristique qui en résulte, soit linéaire.

3. Dispositif selon une des revendications 1 et/ou 2, ou les deux, caractérisé en ce que les bobines détectrices (16 et 16a) recouvrent au moins partiellement les zones (11, 12) et en ce que les bobines détectrices sur toute la longueur et la largeur de bobine conservent la même distance a par rapport à la surface des zones (11, 12).

4. Dispositif selon l'une ou l'autre des revendications 1 à 3, caractérisé en ce que la bobine (50) est enroulée dans le sens de l'axe de l'arbre.

5. Dispositif selon la revendication 4, caractérisé en ce que la géométrie de la bobine (16) est circulaire, ovale ou rectangulaire.

6. Dispositif selon la revendication 5, caractérisé en ce que pour une disposition de détection (13, 14) plusieurs bobines sont branchées en série.

7. Dispositif selon l'une quelconque des revendications 1 à 6, caractérisé en ce que la couche magnétoélastique est constituée d'un alliage Fe-Ni dans un rapport de combinaison 45/55.

8. Procédé pour réalisation du dispositif selon une quelconque des revendications 1 à 7, en particulier pour appliquer le revêtement, caractérisé en ce que sur la paroi de l'objet à mesurer (10), on réalise une structure en relief correspondant au type désiré, en ce qu'on applique sur l'arbre (10) une couche sans précontrainte en matière magnétoélastique, qui recouvre complètement la structure en relief, et en ce que la couche est enlevèe jusqu'à la hauteur maximale du relief.

9. Procédé selon la revendication 8, caractérisé en ce que la couche est enlevée avec ou sans copeaux.

10. Procédé pour réalisation du dispositif selon une quelconque des revendications 1 à 7, caractérisé en ce que la paroi de l'object à mesurer (10) est grattée, en ce qu'une ouche sans précontrainte en matière magnéto-élastique est appliquée et en ce qu'ensuite à l'aide d'un outil pointu un ensemble de rainures à des distances les plus faibles possibles est réalisé.

11. Procédé selon la revendication 10, caractérisé en ce qu'après le grattage de la paroi de l'objet à mesurer (10) on applique sur celle-ci une mince couche de liage.

**Claims**

1. Device for the contactless measurement of the mechanical stresses exerted on a rotating or stationary measurement object (10), at least two areas (11, 12) having a magneto-elastically sensitive surface, the permeability of which changes as a function of the load, being situated on the wall of the measurement object (10) and each of these two areas (11, 12) being assigned at least one sensor arrangement (13, 14) which has in each case a coil (16 and 16a) functioning by self-induction and an oscillator (25) to actuate the coils (16 and 16a) and to induce the alternating fields and an electric evaluation circuit (22) to measure the change in impedance of the coils (16 and 16a), characterized in that the areas (11, 12) have a surface applied without prestress and a groove pattern aligned at +45° and/or −45° to the shaft axis, in that the coils (16 and 16a), together with at least one capacitor (21 and 21a) in each case, each form a parallel oscillation circuit which are parts of the electric evaluation circuit (22) so that an almost linear characteristic curve is produced for the mechanical load.

2. Device according to Claim 1, characterized in that the resistance values of the drop resistors (26 and 26a) assigned to the sensor coils (16 and 16a), the inductivities and ohmic resistance values of the sensor coils (16 and 16a), the capacitance of the capacitors (21 and 21a) and the frequency of the source (25) of the alternating voltage are coordinated with the groove pattern of the areas (11, 12) in such a way that a linear characteristic curve results.

3. Device according to Claim 1 and/or 2, characterized in that the sensor coils (16 and 16a) cover the areas (11, 12) at least partially, and in that the sensor coils have a constant distance (a) from the surface of the areas (11, 12) over the entire length and the width of the coils.

4. Device according to one of Claims 1 to 3, characterized in that the coil (50) is wound in the direction of the shaft axis.

5. Device according to Claim 4, characterized in that the geometry of the coil (16) is circular, oval or rectangular.

6. Device according to Claim 5, characterized in that a plurality of coils are connected in series for one sensor arrangement (13, 14).

7. Device according to one of Claims 1 to 6, characterized in that the magneto-elastic layer consists of a Fe-Ni alloy with a mixture ratio of 45/55.

8. Process for the manufacture of the device according to one of Patent Claims 1 to 7, in particular for the application of the coating, characterized in that a relief structure corresponding to the desired type is introduced into the wall of the measurement object (10), in that a non-prestressed layer of magneto-elastic material is applied to the shaft (10), which layer completely covers the relief structure, and in that the layer is removed down to the maximum height of the relief.

9. Process according to Claim 8, characterized in that the layer is removed with or without cutting.

10. Process for the manufacture of the device according to one of Patent Claims 1 to 7, in particular for the application of the coating, characterized in that the wall of the measurement object (10) is roughened, in that a non-prestressed layer of magneto-elastic material is applied, and in that a desired groove form is subsequently introduced with the smallest possible intervals with the aid of a pointed tool.

11. Process according to Claim 10, characterized in that a thin bonding layer is applied to the wall of the measurement object (10) after the latter has been roughened.

FIG.1

FIG.2

FIG.3

$U_M$

47        45

Drehmoment +

–

46

48

FIG.5

FIG.6

FIG.7

51
50

T

+

a

FIG.4

57
56

10

55

FIG.8

57
56

10